(19) **Europäisches Patentamt**
**European Patent Office**
**Office européen des brevets**

(11) **EP 1 387 519 A2**

(12) # DEMANDE DE BREVET EUROPEEN

(43) Date de publication:
**04.02.2004 Bulletin 2004/06**

(51) Int Cl.⁷: **H04L 9/06**

(21) Numéro de dépôt: **02291728.0**

(22) Date de dépôt: **09.07.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(71) Demandeur: **CP8
78431 Louveciennes Cedex (FR)**

(72) Inventeurs:
• **Akkar, Mehdi-Laurent
94250 Gentilly (FR)**
• **Goubin, Louis
75015 Paris (FR)**

(54) **Procédé de sécurisation d'un ensemble électronique contre des attaques par introduction d'erreurs**

(57)    L'invention concerne un procédé de sécurisation d'un ensemble électronique mettant en oeuvre un algorithme quelconque contre les attaques par introduction d'erreur.

Le procédé selon la présente invention consiste à effectuer un calcul supplémentaire par une fonction de vérification sur au moins un résultat intermédiaire afin d'obtenir une empreinte de calcul et à effectuer au moins une autre fois tout ou partie du calcul afin de recalculer ladite empreinte et de les comparer dans le but de détecter une éventuelle erreur.

**FIG.2**

EP 1 387 519 A2

## Description

La présente invention concerne un procédé de sécurisation d'un ensemble électronique mettant en oeuvre un algorithme quelconque où il est nécessaire de vérifier que le déroulement de l'algorithme a été effectué sans erreurs, que ce soit pour les étapes intermédiaires ou pour les données intermédiaires. Plus précisément, le procédé vise à réaliser une version de l'algorithme qui ne soit pas vulnérable face à un certain type d'attaques par introduction d'une ou plusieurs erreurs - dites *Differential Fault Analysis* ou *Extended Fault Analysis* - qui cherchent à obtenir des informations sur une ou plusieurs données ou opérations intervenant dans le calcul de l'algorithme à partir de l'étude du déroulement des calculs de l'ensemble électronique lorsqu'une ou plusieurs erreurs sont introduites.

## DOMAINE TECHNIQUE

Les algorithmes considérés dans ce qui suit sont à titre illustratif mais non limitatif des algorithmes cryptographiques qui utilisent une clé secrète pour calculer une information de sortie en fonction d'une information d'entrée ; il peut s'agir d'une opération de chiffrement, de déchiffrement, ou de signature ou de vérification de signature, ou d'authentification ou de non-répudiation. Ils sont construits de manière à ce qu'un attaquant, connaissant les entrées et les sorties, ne puisse en pratique déduire aucune information sur la clé secrète elle-même.

Cependant la présente invention couvre tous les algorithmes pour lesquels il est nécessaire de s'assurer que toutes les étapes et données intermédiaires intervenant lors du calcul ont été effectuées sans erreurs.

La première apparition d'attaques par introduction d'erreurs date de 1996:

- Ref (0): New Threat Model Breaks Crypto Codes - D. Boneh, R. DeMillo, R. Lipton - Bellcore Press Release
  Un exemple d'une telle attaque sur l'algorithme cryptographique à clé secrète DES -ref (1)- pourra être trouvé dans l'article -ref (2)- publié par Eli Biham et Adi Shamir en 1996.
- Ref (1) : FIPS PUB 46-2, *Data Encryption Standard,* 1994
- Ref (2) : A New Cryptanalytic Attack on DES, Draft

L'invention proposée concerne également des attaques étendues telles que celles dans lesquelles l'attaquant tire partie du fait que certaines fonctions ont une sortie plus petite que l'entrée ; il existe différentes entrées qui donnent la même sortie. Ainsi en modifiant l'entrée on peut conserver un résultat correct en sortie ce qui peut parfois être intéressant.

Le procédé, objet de la présente invention, a pour objet la suppression des risques d'attaques DFA d'ensembles ou systèmes électroniques en modifiant les fonctions qui interviennent lors du calcul.

Un autre objet de la présente invention est de modifier un processus de calcul cryptographique mis en oeuvre par des ensembles électroniques de cryptographie protégés de manière que l'hypothèse fondamentale précitée ne soit plus vérifiée, à savoir qu'aucune variable ou fonction intermédiaire dans laquelle une erreur est introduite reste non détectée par le système.

## RESUME DE L'INVENTION

La présente invention concerne un procédé de sécurisation de l'exécution d'un programme dans un ensemble électronique comportant des moyens de traitement de l'information et des moyens de mémorisation d'informations caractérisé en ce qu'il consiste à effectuer un calcul supplémentaire par une fonction de vérification sur au moins un résultat intermédiaire afin d'obtenir une empreinte de calcul.

La présente invention concerne également un ensemble électronique et par exemple une carte à puce et un programme permettant d'implémenter ledit procédé.

## DESCRIPTION SOMMAIRE DES DESSINS

D'autres buts, avantages et caractéristiques de l'invention apparaîtront à la lecture de la description qui va suivre de la mise en oeuvre du procédé selon l'invention et d'un mode de réalisation d'un ensemble électronique adapté pour cette mise en oeuvre, donnés à titre d'exemple non limitatif en référence aux dessins ci-annexés dans lesquels :

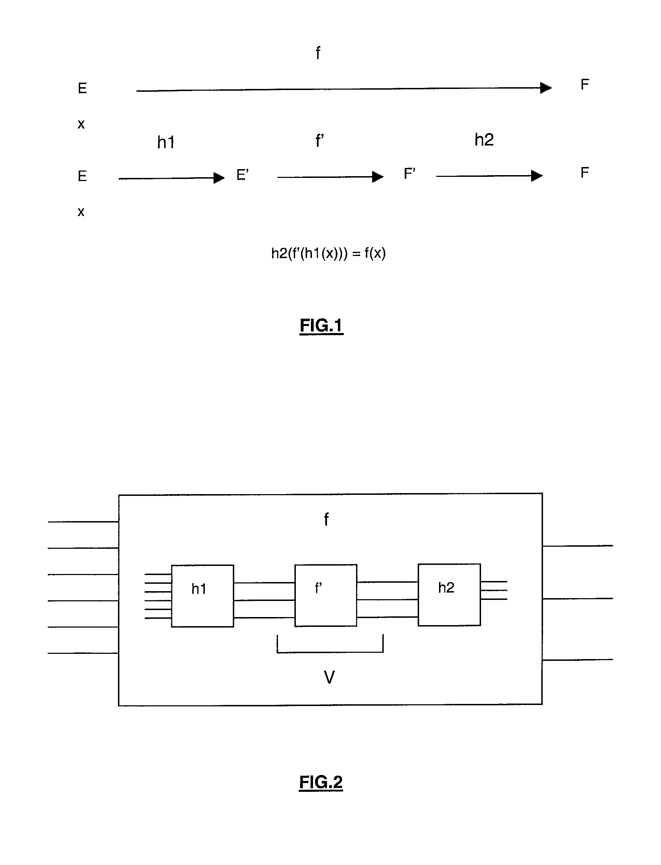

- les figures 1 et 2 montrent une représentation schématique d'un mode de réalisation du procédé selon la présente invention.

## MANIERE DE REALISER L'INVENTION

Le procédé selon l'invention vise à sécuriser un ensemble électronique, et par exemple un système embarqué tel qu'une carte à puce mettant en oeuvre un processus de calcul cryptographique qui utilise une clé secrète. L'ensemble électronique comprend des moyens de traitement d'information tels qu'un processeur et des moyens de stockage d'information tels qu'une mémoire. Le processus de calcul cryptographique est installé dans la mémoire, par exemple de type ROM dudit ensemble. Le processeur dudit système exécute le processus de calcul en utilisant une clé secrète, stockée dans une zone secrète d'une mémoire, par exemple de type EEPROM.

Le procédé de sécurisation dudit ensemble électronique mettant en oeuvre un processus de calcul classique qui doit être sans erreur, objet de la présente invention et illustré sur les figures 1 et 2, est remarquable en ce que l'on modifie les fonctions f mises en oeuvres dans le calcul par des fonctions plus générales f' (dites « sur-fonctions ») mais d'où il est aisé de retrouver le résultat normal de la fonction f. Toute erreur introduite dans le calcul sera détectée par une fonction dite de vérification V associée à la « sur-fonction ». Ces sur-fonctions f' et fonctions V de vérifications seront bien entendu décrites par la suite et de nombreux exemples seront également donnés.

Le principe de sur-fonction f' selon la présente invention est décrit dans ce qui suit en référence aux figures 1 et 2. Un algorithme exécuté par un dispositif électronique est toujours une succession d'opérations élémentaires. Nous décrirons ici le principe de sur-fonction sur une de ces opérations élémentaires. Toute opération élémentaire peut être décrite comme une fonction f d'un ensemble fini E vers un ensemble fini F (figure 2). Le principe de la sur-fonction est de considérer une sur-fonction f' de E' vers F' où :

- E' est un ensemble tel qu'il existe une injection $h_1$ de E dans E' (c'est à dire que si l'on prend deux éléments différent de E, leur image par $h_1$ sont également différent dans E'). En pratique cela revient essentiellement à dire que E' compte au moins autant d'éléments que E.
- F' est un ensemble tel qu'il existe une surjection $h_2$ de F' dans F (c'est à dire que tout pour tout éléments y de F il existe x élément de F' tel que $h_2(x)=y$). En pratique cela signifie essentiellement que F' compte au moins autant d'éléments que F.
- Et surtout il faut que l'on ait pour tout élément x de E l'égalité : $h_2(f'(h_1(x))) = f(x)$. Cela revient à dire que l'on peut calculer la fonction f en passant par le calcul de la fonction f' et par les sur-ensembles E' et F'.

La détection des erreurs est réalisée par une fonction V de vérification. Une fonction de vérification est une fonction qui sert à vérifier les résultats intermédiaires (ou ceux jugés critiques) d'un algorithme. Formellement si l'on note :

- $B$ = $\{0,1\}^*$ l'ensemble des mots binaires.
- E = $\{X_i\}_{0<i<n+1}$ où les $X_i$ sont en pratique des éléments de $B$, l'ensemble des n résultats intermédiaires que l'on veut protéger.

Une fonction de vérification V est une fonction qui à tout élément de E associe un mot binaire de longueur fixe N : $V : E \rightarrow \{0,1\}^N$ Dans la pratique, plus concrètement :

- V est une fonction qui à un ensemble de valeur intermédiaire associe une « empreinte » du calcul qui servira en réitérant le calcul à détecter une éventuelle erreur.

- On voit bien que dans la pratique N sera de l'ordre de 8, 32 ou 64 (taille habituelle en informatique) et que l'ensemble des valeurs à protéger étant plus grand la fonction de vérification ne pourra être injective. Ainsi des calculs différents pourront donner des résultats similaires par V (cette propriété sera appelé collision dans la suite). Ainsi il faudra choisir V de manière à ce que des collisions soient les moins fréquentes possibles et bien réparties.

Le principe de sécurisation selon la présente invention consiste à combiner les deux méthodes précédemment décrites : on applique d'abord le principe de sur-fonction afin de protéger les fonctions individuellement et enfin on applique une fonction de vérification. Cela donne une empreinte du calcul. On peut alors réitérer une ou plusieurs fois tout ou partie du calcul afin de recalculer une nouvelle empreinte pour ensuite comparer ces empreintes afin de détecter d'éventuelles erreurs. La fonction de vérification effectue un calcul sur au moins un résultat intermédiaire provenant d'une opération du processus de calcul ou d'une sur-fonction. Un résultat intermédiaire est un résultat obtenu dans le cours de l'exécution d'un processus de calcul cryptographique, par opposition au résultat final. A titre illustratif, selon une forme particulière de réalisation, il est judicieux d'appliquer une ou plusieurs fonctions de vérification sur des résultats intermédiaires obtenus en des points sensibles dans le cours de l'exécution de l'algorithme considéré.

Il est donné dans ce qui suit un premier exemple d'application du procédé de sécurisation selon la présente invention, à l'algorithme DES.

Pour ce qui est des sur-fonctions, on en utilise seulement une afin de protéger les boites-S. En effet, les boites-S ont une entrée sur 6 bits et une sortie sur 4 bits. Ainsi plusieurs valeurs de 6 bits peuvent donner le même résultat sur 4 bits, ce que peut exploiter un attaquant. Dans le cas présent :

■    $E=\{0,1\}^6$ et $F=\{0,1\}^4$

On va alors introduire

■    E'= E et $h_1$ fonction identité
■    F'= $\{0,1\}^6$ et $h_2$ qui consiste juste à enlever le bit de poids fort et celui de poids faible d'un mot de F.
■    f' est construit ainsi : si x est un élément de E' (donc sur 6 bits), le premier bit et le dernier de f'(x) sont ceux de x ; les quatre bits du milieu quant à eux sont ceux donnés par le résultat habituel des boîtes. Une analyse sommaire du mode de fonctionnement des boites S montre que l'on a bien pour tout élément de E :$h_2(f'(h_1(x))) = $ Boite-S(x). Pour ce qui est de la fonction de vérification, tout d'abord on choisit de la faire agir sur les résultats en sortie de chaque round (64 bits) ainsi que sur les sorties concaténés de la fonction f' (48 bits qui seront considérés comme 64).

Reste alors à choisir la fonction de vérification proprement dite : un certain nombre d'exemples sont donnés dans ce qui suit.

On note dans la suite $X = \{X_i\}_{0<i<n+1}$ l'ensemble des valeurs à vérifier et V la fonction de vérification. Parfois on note $V_j$ la valeur de vérification intermédiaire prenant en compte les j premiers $X_j$. Ainsi on a $V(x) = V_n$

Un premier exemple de fonction de vérification est la concaténation des valeurs : cela signifie que l'on conserve une trace de tout le calcul, ce qui est coûteux en mémoire mais efficace car sans risque de collision.

$$V_{j+1} = V_j \parallel X_{j+1}$$

Un deuxième exemple est le ou exclusif des valeurs:

$$V(x_1, \ldots ,x_n) = x_1 \text{ XOR } \ldots \text{ XOR } x_n$$

Un troisième exemple est l'addition modulo $2^N$ (N est la longueur du résultat). Cela revient à ajouter les résultats intermédiaires et tronquer le résultat à la longueur voulue :

$$V_{j+1} = ( V_j + X_{j+1} ) \text{ modulo } 2^N$$

Un quatrième exemple est le CRC habituel des valeurs :

$$V(X_1, \ldots ,X_n) = \text{CRC} (X_1, \ldots ,X_n)$$

Un cinquième exemple est le ou exclusif des valeurs où l'on décale circulairement le résultat intermédiaire d'un nombre de bit arbitraire (par exemple 1) :

$$V_{j+1} = (V_j << 1) \text{ XOR } x_{j+1}$$

Un sixième exemple est le ou exclusif des valeurs avec multiplication. A chaque étape, on effectue un XOR sur la valeur de vérification intermédiaire avec le produit de la valeur tronquée de vérification intermédiaire et du $x_i$ courant.

$$V_{j+1} = V_j \text{ XOR } ((V_j \times x_{j+1}) \text{ modulo } 2^N)$$

Un septième exemple est le hachage des données par une fonction cryptographique. On peut par exemple concaténer toutes les valeurs, les hacher avec la fonction SHA-1 et conserver le nombre voulu de bits du résultat.

$$V = \text{SHA-1} (X)$$

Il est donné dans ce qui suit un deuxième exemple d'application du procédé de sécurisation selon la présente invention, à l'algorithme RSA dans lequel on effectue parfois la boucle suivante utilisant des variables M,C1 ,C2,N, et une chaîne de bit D.
C1 = 1
Pour i allant de 0 à N faire :

$$C2 = C1 \times C1$$

$$C1 = C2 \times M$$

Si le bit i de D vaut 0 faire
C1 = C2
Fin de Si
Fin de boucle
Sortir le résultat C1.
On voit que si l'attaquant modifie par exemple C1 avant le « si » et que le si est exécuté, le résultat est correct : l'attaquant peut ainsi obtenir des informations sur la valeur de D.
Dans le présent cas, on n'utilise pas de surfonction ; l'application d'un simple ou exclusif sur les valeurs intermédiaires C1 et C2 permet de détecter toute erreur.
Parfois l'attaquant ne peut contrôler parfaitement l'introduction d'erreurs. Ainsi en travaillant sur un espace plus grand et en vérifiant la cohérence des résultats, il est possible de détecter une erreur introduite car celle-ci génère un résultat impossible : par exemple si l'on effectue la somme de deux nombres de huit bits mais que le résultat est stocké sur 16 bit, une erreur provoqué sur le résultat a de bonne chance de toucher les 7 bits de poids fort (normalement à 0 par les lois de l'arithmétique) et donc l'erreur d'être détectée.

**Revendications**

1. Procédé de sécurisation d'un ensemble électronique mettant en oeuvre un processus de calcul, **caractérisé en ce qu'**il consiste à effectuer un calcul supplémentaire par une fonction de vérification sur au moins un résultat intermédiaire afin d'obtenir une empreinte de calcul.

2. Procédé selon la revendication 1, **caractérisé** en qu'il consiste à effectuer au moins une autre fois tout ou partie du calcul afin de recalculer ladite empreinte et de les comparer dans le but de détecter une éventuelle erreur.

3. Procédé selon l'une des revendications 1 ou 2, **caractérisé en ce qu'**il consiste à :

   - effectuer une opération élémentaire à l'aide d'une autre opération dite sur-fonction agissant à partir de et/ou vers un ensemble plus grand ;
   - effectuer ledit calcul par ladite fonction de vérification à l'aide du résultat obtenu par ladite sur-fonction afin d'obtenir ladite empreinte de calcul.

4. Procédé selon la revendication 3, **caractérisé en ce que** le calcul de l'opération élémentaire peut être retrouvé à partir du calcul de la sur-fonction.

5. Procédé selon l'une des revendications 3 ou 4, **caractérisé en ce qu'**une opération élémentaire f de E dans F est remplacée par une opération f' de E' dans F' où :

   - E' et F' sont des sur-ensembles de E et F ;
   - On passe de E à E' par $h_1$ injective ;
   - On passe de F' à F par $h_2$ surjective ;
   - pour tout élément x de E on a : $h_2(f'(h_1(x)))=f(x)$.

6. Ensemble électronique comprenant des moyens de stockage d'un processus de calcul, des moyens de traitement dudit processus, **caractérisé en ce qu'**il comprend des moyens de stockage d'une fonction de vérification permettant d'effectuer un calcul supplémentaire sur des résultats intermédiaires afin d'obtenir une empreinte de calcul.

7. Programme d'ordinateur comprenant des instructions de code de programme pour l'exécution des étapes du procédé selon l'une des revendications 1 à 5 lorsque ledit programme est exécuté dans un système informatique.

f

E ———————————————————————————————→ F

x

        h1              f'              h2

E ——————→ E' ——————→ F' ——————→ F

x

h2(f'(h1(x))) = f(x)

**FIG.1**

f

| h1 | f' | h2 |

V

**FIG.2**